# EUROPEAN PATENT APPLICATION

(11) **EP 4 455 976 A1**
(43) Date of publication of application: **30.10.2024**
(21) Application number: 22911599.3
(22) Date of filing: 02.11.2022
(51) Int. Cl.: G06Q 50/02, G06Q 50/10, A01G 9/14, A01G 9/02, A01G 31/02, A01G 9/24, A01C 23/00

(54) **PLANT MANAGEMENT METHOD AND APPLICATION PROGRAM**

(30) Priority: 21.12.2021 KR 20210183812
(71) Applicant: LG Electronics Inc., Yeongdeungpo-gu Seoul 07336 (KR)
(72) Inventor: CHOI, Minhwan, Seoul 08592 (KR)
(74) Representative: Ter Meer Steinmeister & Partner
(86) International application number: PCT/KR2022/017024
(87) International publication number: WO 2023/120961

(57) **Abstract**

The present invention provides a system for managing a plant of a plant cultivation apparatus. According to one embodiment, a plant management system may comprise steps in which: a processing unit acquires a picture including plant information by means of a user terminal; the processing unit recognizes the plant information included in the picture; the processing unit generates a plant management method in a plant cultivation apparatus on the basis of the plant information; and the plant management method is presented to a user through the user terminal.

## Description

### TECHNICAL FIELD

The present invention relates to a plant management system including a method for managing a plant by using a plant treatment apparatus and an application program provided on a user terminal.

### BACKGROUND ART

A plant cultivation apparatus refers to an apparatus that enables the cultivation of plants by artificially supplying light energy, moisture, soil, and temperature necessary for plant growth. The plant cultivation apparatus forms a predetermined cultivation space having an environment suitable for the growth of plants, and cultivates and stores plants in the predetermined cultivation space.

Additionally, the plant cultivation apparatus may include a configuration that supplies moisture and nutrients necessary for the growth of plants. Additionally, plants that are cultivated in the plant cultivation apparatus may receive light energy artificially from the plant cultivation apparatus without receiving light irradiated from the sun outside the plant cultivation apparatus.

Accordingly, a user may cultivate plants by periodically supplying moisture or nutrients during a plant cultivation process, and plants that are cultivated in the plant cultivation apparatus may be grown by receiving nutrients, moisture, and light energy supplied from the plant cultivation apparatus.

US2021/0204489A1, which is prior art document 1, discloses a smart plant cultivation system. Prior art document 1 discloses setting environmental control based on an average value of optimal environmental values of crops being cultivated by checking crops cultivation information (crop species, whether the crops are cultivated) for each cultivation location of the cultivation apparatus. However, in prior art document 1, environmental control is set based only on initial information about crops, and thus, optimization is not performed for each crop life cycle.

### DISCLOSURE OF INVENTION

### TECHNICAL PROBLEM

An object of the present invention is to provide a plant management system that is capable of effectively determining a growth rate and abnormal conditions of plants and provide a management method, without a camera installed in a plant cultivation apparatus.

An object of the present invention is to provide a plant management system that is capable of effectively cultivating and managing plants.

An object of the present invention is to provide a plant management system that is capable of improving the quality of cultivated crops.

An object of the present invention is to provide a plant management system that is capable of optimizing environmental control according to the life cycles of plants.

An object of the present invention is to provide a plant management system that is capable of providing an optimal environment for growing a plurality of types of plants.

An object of the present invention is to provide a plant management system that is capable of optimally controlling an environment for each crop life cycle when growing a plurality of types of plants.

An object of the present invention is to provide a plant management system that is capable of acquiring video of a growth process from the time of plant introduction.

The technical objects to be achieved by the present invention are not limited to the technical objects described above, and other technical objects will be clearly understood by those of ordinary skill in the art from the following description.

### TECHNICAL SOLUTION

The present invention provides a system for managing a plant of a plant cultivation apparatus. In an embodiment, a plant management method of managing plants by using a plant cultivation apparatus may include: acquiring, by a processing unit, a photo including plant information of a first plant; recognizing, by the processing unit, the plant information included in the photo; and presenting, by the processing unit, to a user a first plant management method suitable for the first plant in the plant cultivation apparatus from the plant information.

In an embodiment, the plant cultivation apparatus may include a plurality of beds capable of providing different growth environments, wherein the generating of the first plant management method may include determining a bed suitable for growth of the first plant among the plurality of beds.

In an embodiment, when a second plant different from the first plant is being cultivated in one of the plurality of beds, the first plant management method may include, when the first plant is not suitable for sharing the growth environment with the second plant, determining a bed, which is different from the bed in which the second plant is cultivated, as the bed suitable for the growth of the first plant.

In an embodiment, when a second plant different from the first plant and a third plant different from the first plant and the second plant are being cultivated in one or more of the plurality of beds, the first plant management method may include determining a bed, on which a plant with a similar growth environment to the first plant among the second plant and the third plant are placed, as the bed suitable for the growth of the first plant.

In an embodiment, the plant management method may further include, by the processing unit, receiving, from a user, whether the first plant is arranged in the first plant management method, wherein the processing unit may command the plant cultivation apparatus to control one or more growth environment conditions among an amount of light, a temperature, and a nutrient solution as an optimal value for the first plant.

In an embodiment, when a plurality of species are placed on one of the plurality of beds, one or more of an amount of light or a temperature provided to the one bed by the plant cultivation apparatus may be compared with a growth environment condition of each of the plurality of species and a maximum value of a common range thereof may be determined.

In an embodiment, when a plurality of species are placed on one of the plurality of beds, a supply cycle of a nutrient solution provided to the one bed by the plant cultivation apparatus may be compared with a growth environment condition of each of the plurality of species and a supply cycle with a shortest period may be determined.

In an embodiment, the plant management method may include: when a first setting time point has elapsed, requesting, by the processing unit, the user to confirm whether an event has occurred; and when the occurrence of the event is received, presenting, by the processing unit, to the user a second plant management method in which the bed suitable for the growth of the plant is re-determined based on a growth environment conditions after the occurrence of the event.

In an embodiment, the second plant management method may include, when an empty bed exists among the plurality of beds, separating some of a plurality of plants being cultivated in one bed and arranging the separated plants in the empty bed.

In an embodiment, when a second setting time point that is later than the first setting time point has elapsed without the occurrence of the event, the processing unit may receive a photo including an exterior appearance of the plant after the second setting time point, may determine a degree of growth of the plant from the exterior appearance of the plant, and may present to the user a third plant management method in which the bed suitable for the growth of the plant is re-determined based on the degree of growth.

In an embodiment, the processing unit may communicate with the user through a user terminal, and the user terminal may provide a capturing guide to the user when capturing a photo containing the plant information.

In an embodiment, the plant information may be information about species of a crop to be cultivated.

In an embodiment, the photo including the plant information may be a photo captured after a harvestable time point of the plant being cultivated in the plant cultivation apparatus, and the plant information may be an exterior appearance of the plant.

In an embodiment, the third plant management method may include: determining whether the plant is harvestable from the plant information; when it is determined that the plant is harvestable, notifying to the user that the plant is harvestable; and when it is determined that the plant is unharvestable, updating a harvestable time point.

In an embodiment, the processing unit may generate a video by arranging the captured photos in chronological order.

In an embodiment, an application program that is installed on and executed by a terminal to manage plants of a plant cultivation apparatus is provided. In an embodiment, an application program that is installed on and executed by a terminal to manage plants of a plant cultivation apparatus may include: acquiring a photo including plant information; recognizing the plant information included in the photo; and presenting to a user a first plant management method of the plant cultivation apparatus, which is output based on the plant information.

In an embodiment, the plant cultivation apparatus may include a plurality of beds capable of providing different growth environments, and the generating of the first plant management method may include determining a bed suitable for growth of a plant recognized through the plant information among the plurality of beds.

In an embodiment, the first plant management method may include: when other plants are being cultivated in one of the plurality of beds, determining whether it is appropriate for the plant recognized through the plant information to share a growth environment with the other plant; and when it is not appropriate for the plant recognized through the plant information to share the growth environment with the other plants, determining a bed, which is different from the bed in which the other plants are cultivated, as the bed suitable for the growth.

In an embodiment, the first plant management method may include, when other plants are being cultivated in one of the plurality of beds, determining a bed, on which a plant with a similar growth environment among the plants recognized through the plant information and the other plants is placed, as the bed suitable for the growth.

In an embodiment, when a first setting time point has elapsed, a user may be requested to confirm whether an event has occurred, and when the occurrence of the event is received, a second plant management method in which the bed suitable for the growth of the plant is re-determined based on a growth environment conditions after the occurrence of the event may be presented to the user.

In an embodiment, the second plant management method may include, when an empty bed exists among the plurality of beds, separating some of a plurality of plants being cultivated in one bed and arranging the separated plants in the empty bed.

In an embodiment, when a second setting time point that is later than the first setting time point has elapsed without the occurrence of the event, a photo including an exterior appearance of the plant may be received, a degree of growth of the plant may be determined from the exterior appearance of the plant, and a third plant management method in which the bed suitable for the growth of the plant is re-determined based on the degree of growth may be presented to the user.

In an embodiment, the photo including the plant information may be a photo captured after a harvestable time point of the plant being cultivated in the plant cultivation apparatus, the plant information may be an exterior appearance of the plant, and the first plant management method may include: determining whether the plant is harvestable from the plant information; when it is determined that the plant is harvestable, notifying to the user that the plant is harvestable; and when it is determined that the plant is unharvestable, updating a harvestable time point.

In an embodiment, a video may be generated by arranging the captured photos in chronological order.

### ADVANTAGEOUS EFFECTS

According to various embodiments of the present invention, it is possible to effectively determine a growth rate and abnormal conditions of plants and provide a management method, without a camera installed in a plant cultivation apparatus.

According to various embodiments of the present invention, it is possible to effectively cultivate and manage plants.

According to various embodiments of the present invention, it is possible to improve the quality of cultivated crops.

According to various embodiments of the present invention, it is possible to optimize environmental control according to the life cycles of plants.

According to various embodiments of the present invention, it is possible to provide an optimal environment for growing a plurality of types of plants.

According to various embodiments of the present invention, it is possible to optimally control an environment for each crop life cycle when growing a plurality of types of plants.

According to various embodiments of the present invention, it is possible to acquire video of a growth process from the time of plant introduction.

The effects of the present invention are not limited to the effects described above, and effects that are not mentioned herein will be clearly understood from the present specification and the accompanying drawings by those of ordinary skill in the art.

### BRIEF DESCRIPTION OF DRAWINGS

FIG. 1 is a perspective view of a plant cultivation apparatus according to an embodiment of the present invention.
FIG. 2 is a perspective view of a plant cultivation apparatus in which a door is opened according to an embodiment of the present invention.
FIG. 3 is a perspective view showing a bed and a discharge portion in a plant cultivation apparatus according to an embodiment of the present invention.
FIG. 4 is a perspective view showing a state in which a cultivation pot is seated on a bed of a plant cultivation apparatus according to an embodiment of the present invention.
FIG. 5 is a side view showing a supply unit in a plant cultivation apparatus according to an embodiment of the present invention.
FIG. 6 is a top view of the inside of a water supply unit in a plant cultivation apparatus, when viewed from above, according to an embodiment of the present invention.
FIG. 7 is a view schematically showing a side cross-section of a plant cultivation apparatus according to an embodiment of the present invention.
FIG. 8 is a perspective view showing a cultivation pot applied to a plant cultivation apparatus according to an embodiment of the present invention.
FIG. 9 is an exploded perspective view showing a cultivation pot applied to a plant cultivation apparatus according to an embodiment of the present invention.
FIG. 10 is a view describing a plant management system according to an embodiment of the present invention and showing a state in which a plant cultivation apparatus, a server, and a user terminal communicate with each other.
FIG. 11 is a view describing a processing unit according to an embodiment of the present invention.
FIG. 12 shows a state in which a cultivation screen is displayed on a user terminal.
FIG. 13 is a flowchart describing a method for inputting a crop to be cultivated or a crop being cultivated to a user terminal and a flow of receiving a suggestion on a management method for the input plant.
FIG. 14 shows a state in which a user uses a user terminal to capture a photo including plant information.
FIG. 15 is a flowchart describing a flow of providing notification to a user about harvesting plants cultivated in a plant cultivation apparatus.
FIG. 16 shows a camera screen displayed on a user terminal and represents a first example in which a capturing guide is provided.
FIG. 17 shows a camera screen displayed on a user terminal and represents a second example in which a capturing guide is provided.
FIG. 18 is a flowchart describing a flow of confirming whether it is necessary to provide a new environment to a plant in a plant growth process and providing an optimal arrangement.

### BEST MODE FOR CARRYING OUT THE INVENTION

Hereinafter, preferred embodiments will be described in detail with reference to the accompanying drawings. The configuration or control method of the apparatus described below is only for describing embodiments of the present disclosure and is not intended to limit the scope of the present disclosure, and the same reference numbers used throughout the specification denote the same elements.

Specific terms used in the present specification are only for convenience of explanation and are not used to limit the illustrated embodiments.

For example, the expressions such as "same" and "identical" indicate a strictly identical state and also indicate a state in which there is a difference in tolerance or the degree to which the same function is acquired.

In the present specification, it will be understood that when an element is referred to as being "connected" or "coupled" to another element, the element may be directly connected or coupled to the other element or may be connected or coupled to the other element with an intervening element therebetween. On the other hand, in the present specification, it will be understood when an element is referred to as being "directly connected" or "directly coupled" to another element, no intervening element is present therebetween.

It should be noted that the terms "comprise," "include," or "have" as used in the present specification are inclusive and therefore specify the presence of stated features, integers, steps, operations, elements, components, or any combination thereof, but do not preclude the presence or addition of one or more other features, integers, steps, operations, elements, components, or any combination thereof.

For example, the expressions that indicate relative or absolute arrangement, such as "in a certain direction," "along a certain direction," "side by side," "perpendicular to," "around the center," "concentric," or "coaxial," strictly indicate such arrangement and also indicate a state of relative displacement with a tolerance or an angle or distance that achieves the same function.

In order to explain the present disclosure, the following description is based on a spatial orthogonal coordinate system with X, Y, and Z axes orthogonal to each other. Each axis direction (X-axis direction, Y-axis direction, Z-axis direction) refers to both directions in which each axis extends. The '+' sign in front of each axis direction (+X-axis direction, +Y-axis direction, +Z-axis direction) refers to the positive direction, which is one among the two directions in which each axis extends. The '-' sign in front of each axis direction (-X-axis direction, -Y-axis direction, -Z-axis direction) refers to the negative direction, which is the other direction among the two directions in which each axis extends.

The expressions that indicate directions such as front (+Y)/back (-Y)/left (+X)/right (-X)/up (+Z)/down (-Z) mentioned below are defined based on the XYZ coordinate axes. However, this is for the purpose of describing the present disclosure so that the present disclosure can be clearly understood, and each direction may also be defined differently depending on where the reference is set.

The use of terms such as "first, second, and third" in front of the elements mentioned below is only for avoiding confusion about the indicated elements and is independent of the order, importance, or master-slave relationship between the elements. For example, an invention that includes only a second element without a first element can also be implemented.

The singular forms as used in the present specification are intended to include the plural forms as well unless the context clearly indicates otherwise.

Also, the term "and/or" used in the present specification includes a combination of a plurality of listed items or any of the plurality of listed items. In the present specification, "A or B" may include "A," "B," or "both A and B."

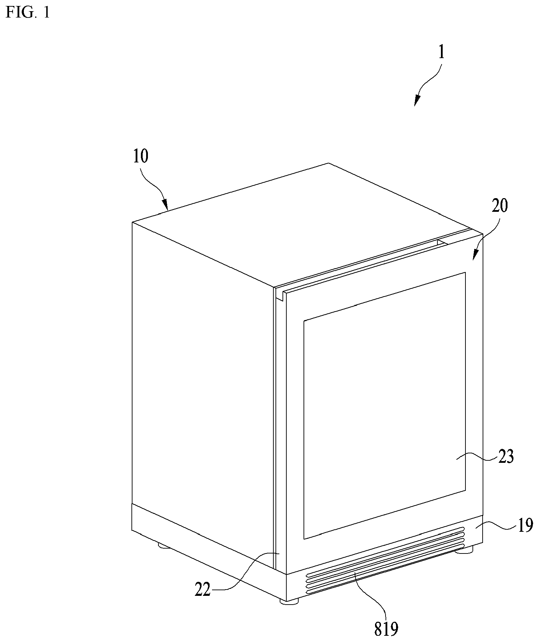

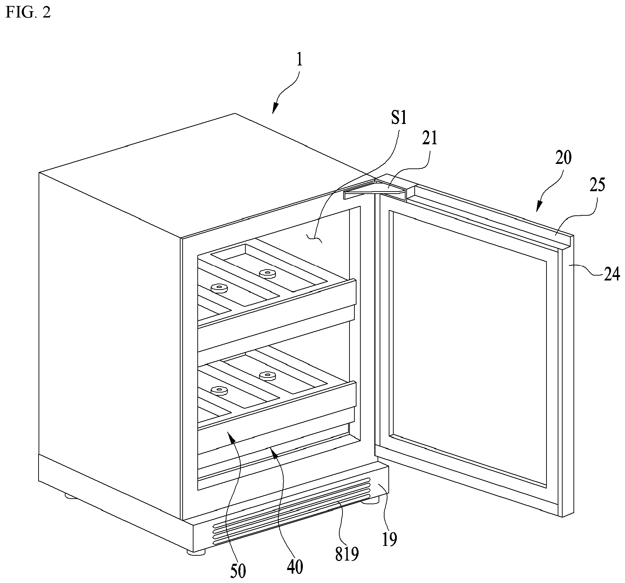

FIG. 1 is a perspective view of a plant cultivation apparatus 1 according to an embodiment of the present invention. FIG. 2 is a perspective view of the plant cultivation apparatus 1 in which a door 20 is opened according to an embodiment of the present invention. The following description is given with reference to FIGS. 1 and 2.

The plant cultivation apparatus 1 according to an embodiment of the present invention may form an exterior appearance by a cabinet 10 forming a cultivation space S1 in which plants are cultivated therein, and a door 20 that opens or closes the cabinet 10.

Plants that are cultivated in the cultivation space S1 may be types of plants that may be eaten by users, are easy to grow, and do not occupy a lot of space, such as leafy vegetables and herbs that may be typically used in wraps or salads. Additionally, plants that are cultivated in the cultivation space S1 may be flowering plants.

The cultivation space S 1 is formed inside the cabinet 10. The cabinet 10 may be formed as a rectangular parallelepiped as shown in the drawing, but it is not necessarily limited thereto, and may be formed in various shapes such as a cylinder or a sphere as long as the cultivation space S1 may be formed therein.

An opening is formed in a portion of the cabinet 10. The opening may be opened or closed by the door 20. The door 20 may be formed to large enough to close the opening of the cabinet 10. Hereinafter, for convenience of explanation, the direction in which the opening faces is referred to as the front.

The door 20 may include a door panel portion 23 that is at least partially transparent. The door panel portion 23 is made of a transparent material such as glass or transparent plastic. A user may see the cultivation space S1 with the naked eye even when the door 20 is closed. The user may confirm the growth state of plants cultivated in the cultivation space S1 even when the door 20 is closed. In an embodiment, the door panel portion 23 may have a color or may be coated with a color or deposited with a metal, or a film may be attached to the door panel portion 23. The door panel portion 23 may be provided so that the cultivation space S1 is selectively visible to the naked eye from the outside.

Meanwhile, the door 20 may include a door frame 22 that forms the circumference of the door 20. The door panel portion 23 may be inserted into and supported by the door frame 22.

In addition, the door 20 may include a door sealing member 24 provided on one surface of the door frame 22 facing the cabinet 10 and disposed along the circumference of the opening formed by the door frame 22. When the door 20 is closed, the door sealing member 24 may be in contact with the cabinet 10 and may shield the cultivation space S1. The door sealing member 24 may absorb an impact force applied to the cabinet 10 by the door 20 when the door 20 is closed, thereby improving the durability and reliability of the plant cultivation apparatus 1. In addition, the door sealing member 24 may block air flow outside the cultivation space S1 and the cabinet 10, thereby maintaining the temperature and humidity of the cultivation space S1 constant. Additionally, the door sealing member 24 may be made of a heat insulation material, and thus, the cabinet 10 may be insulated. Accordingly, the cultivation space S1 may be maintained at a temperature set by a user.

A door coupling portion 21 is provided on one side of the door frame 22 to couple the door 20 to the cabinet 10. The door 20 may be rotatably coupled to the cabinet 10 through the door coupling portion 21. The cultivation space S1 may be opened or closed according to the rotation of the door 20. The door coupling portion 21 may be provided on one of the left and right sides of the door frame 22. Accordingly, the door may be opened or closed to one of the left and right sides with respect to the user, thereby increasing user convenience.

A door handle 25 is formed to be stepped on the door frame 22. The door handle 25 is provided at either the upper end or the lower end of the door frame 22. The user may open or close the door 20 by using the door handle 25. When the door coupling portion 21 is provided on one of the left and right sides of the door frame 22, the door handle 25 may be provided on the other of the left and right sides of the door frame 22.

A lower cabinet 19 may be disposed below the cabinet 10. The lower cabinet 19 may include a vent 819 that receives external air and supplies the external air to the cultivation space S1.

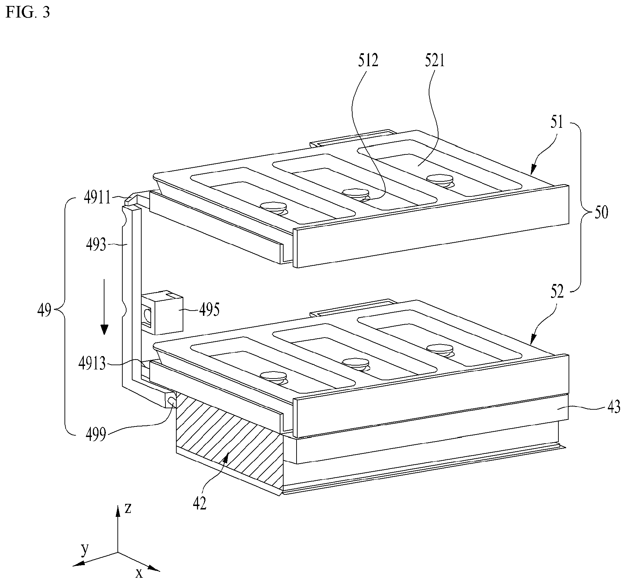

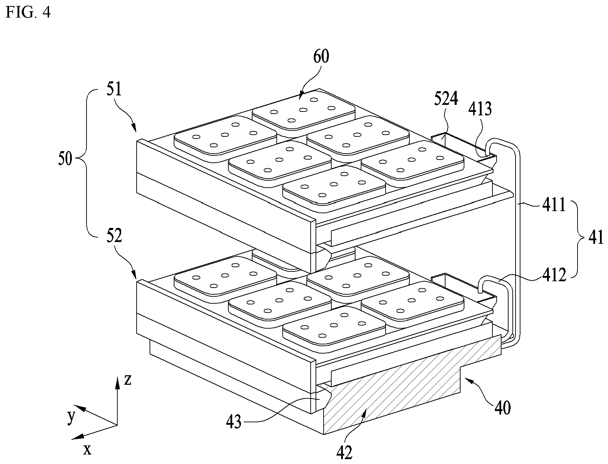

FIG. 3 is a perspective view showing a bed 50 and a discharge portion in the plant cultivation apparatus according to an embodiment of the present invention. FIG. 4 is a perspective view showing a state in which a cultivation pot 60 is seated on the bed 50 of the plant cultivation apparatus 1 according to an embodiment of the present invention. The following description is given with reference to FIGS. 3 and 4.

The plant cultivation apparatus 1 according to an embodiment of the present invention may include the bed 50 provided inside the cabinet 10, and a water supply unit 40 provided inside the cabinet 10 to supply water to the bed 50. The cultivation pot 60 may be seated on the bed 50. The cultivation pot 60 will be described in detail later.

The cultivation pot 60 may be seated on the upper portion of the bed 50. A plurality of cultivation pots 60 may be seated on a plurality of beds 50. The plurality of cultivation pots 60 may each include different types of plants, and thus, different types of plants may be cultivated in the cultivation space S1.

The cultivation pot 60 may be seated on the bed 50 so as to be separable from the bed 50. The user may open the door 20 to access the cultivation space S1 and may seat the cultivation pot 60 on the bed 50. When the growth of the plant is completed and it is time to harvest, the cultivation pot 60 may be separated from the bed 50 and the plant in the cultivation pot 60 may be easily harvested from the outside of the plant cultivation apparatus 1, thereby increasing user convenience.

The cultivation pot 60 may be formed in a shape extending from one side to the other side. The bed 50 may be formed so that the longitudinal direction of the cultivation pot 60 is directed from the front to the rear of the cabinet 10.

A plurality of cultivation pots 60 may be provided and may be spaced apart from each other with respect to a direction perpendicular to the extending direction and seated on the bed 50 side-by-side. Hereinafter, for convenience of explanation, the extending direction of the cultivation pot 60 is defined as a first direction (x direction), and the direction in which the cultivation pots 60 are disposed side-by-side is defined as a second direction (y direction).

The bed 50 may be formed in a rectangular plate shape. Although not shown in the drawings, the bed 50 may be mounted on an entrance/exit guide mounted on both sides of the cabinet 10 so that the bed 50 may enter and exit the cultivation space S1.

The water supply unit 40 may include a water supply unit 40 that supplies water to the cultivation pot 60, and a storage unit 43 that supplies, recovers, and stores water required for the cultivation pot 60. The water supply unit 40 may be configured to supply water to an upper bed 51 and a lower bed 52.

A bed water collection portion 524 may be formed on one side of the bed 50 to receive water through the supply unit 41. The bed water collection portion 524 may be connected to discharge passages 4911 and 4913 provided inside the bed, such that water supplied to the bed water collection portion 524 may be continuously supplied to the cultivation pot 60.

A first supply passage 411 is configured to supply water to the upper bed 51. A second supply passage 412 is configured to supply water to the lower bed 52. The first supply passage 411 may be connected to the storage unit 43 and extend upward so that water is introduced from the storage unit 43 and is moved to the bed water collection portion 524 of the upper bed 51. The second supply passage 412 may be connected to the storage unit 43 and extend upward so that water is introduced from the storage unit 43 and is moved to the bed water collection portion 524 of the lower bed 52.

A discharge hole 413 of the supply unit 41 may be provided at a position corresponding to the bed water collection portion 524. Due to this, water supplied from the first supply passage 411 and the second supply passage 412 may be directly introduced into the bed water collection portion 524.

The supply unit 41 may be made of a metal pipe such as stainless steel. Therefore, the supply unit 41 may be hygienically managed and the shape thereof may be firmly maintained, thereby preventing the passage from being clogged due to deformation and bending and improving the reliability of water supply.

The structure of water supply to the upper bed 51 and the lower bed 52 is the same with only the difference in the upper and lower positions, and water supplied to the bed water collection portion 524 may supply moisture to the cultivation pot 60 mounted on the bed 50.

The water supply unit 40 may include a water supply case 42. The water supply case 42 may be provided below the lower bed 52. The water supply case 42 may be coupled to the cabinet 10.

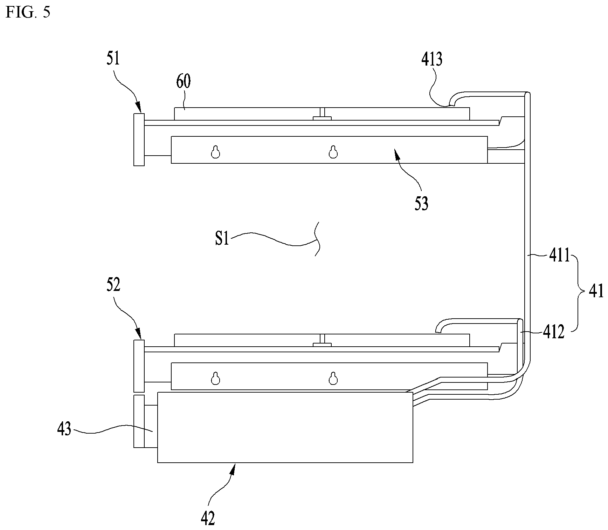

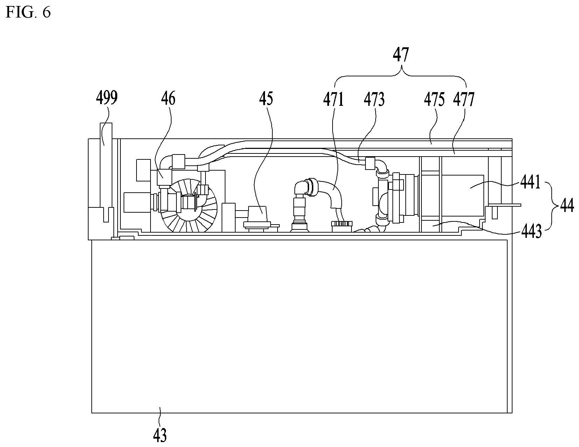

FIG. 5 is a side view showing the supply unit in the plant cultivation apparatus according to an embodiment of the present invention. FIG. 6 is a top view of the inside of the water supply unit in the plant cultivation apparatus, when viewed from above, according to an embodiment of the present invention. The following description is given with reference to FIGS. 5 and 6 together.

The water supply unit 40 may include a water supply case 42, components located inside the water supply case 42, and a pipe connected to these components. A storage unit 43, a supply pump unit 44, a flow rate sensor 45, a branch valve 46, and a connection passage 47 may be provided inside the water supply case 42. Due to the water supply case 42, the storage unit 43, the supply pump unit 44, the flow rate sensor 45, and the branch valve 46 are not exposed to the outside, thereby improving the reliability of the water supply unit 40, and the exterior appearance may be formed neatly.

The water supply unit 40 may include the storage unit 43 that stores water supplied to the plants, and the supply pump unit 44 that is connected to the storage unit 43 and pumps water from the storage unit 43 to the supply unit 41.

The storage unit 43 may be mounted inside the cabinet 10 so as to be retractable and removable in the front-and-rear direction and may have a detachable structure. Accordingly, the storage unit 43 may have a structure that may be easily supplied with water or easily maintained clean.

The supply pump unit 44 includes a pump 441 provided to pump water to the supply unit 41. Additionally, the supply pump unit 44 may further include a pump support portion 443 to support the pump 441 on the cabinet 10. Nutrient solutions necessary for plants may be stored in the storage unit 43, and water in the storage unit 43 may be supplied to the supply unit 41 through a first connection passage 471 connected to the pump 441.

The flow rate sensor 45 detects the flow rate of supplied water. The flow rate sensor 45 prevents water from overflowing due to excessive supply of water to the cultivation pot 60. The amount of water supplied to the cultivation pot 60 may be adjusted by constant water supply through the flow rate sensor 45. The flow rate sensor 45 may supply an optimal amount of water to the cultivation pot 60 at each stage of plant growth, thereby preventing excessive moisture from being stored in the cultivation pot 60. In this manner, the cultivation pot 60 may be kept clean at all times, and the humidity in the bed 50 and the cultivation space S1 may be appropriately maintained.

The branch valve 46 may be opened when the pump 441 is driven, so that water may be supplied toward the supply unit 41. The branch valve 46 may be connected to the plurality of passages according to the number of passages provided so that the supply unit 41 corresponds to the number of bed 50. The storage unit 43 and the pump 441 may be connected by the first connection passage 471. The pump 441 and the branch valve 46 may be connected by a second connection passage 473. The branch valve 46 may be connected to a third connection passage 475 connected to the first supply passage 411. In addition, the branch valve 46 may be connected to a fourth connection passage 477 connected to the second supply passage 412.

Water supplied from the second connection passage 473 is moved to the third connection passage 475 and/or the fourth connection passage 477 by the branch valve 46. Water supplied to the third connection passage 475 is supplied to the first supply passage 411. Water supplied to the fourth connection passage 477 is supplied to the second supply passage 412. By operating the pump 441, water in the storage unit 43 may be supplied to the cultivation pot 60 and/or the bed 50 through the branch valve 46.

A discharge portion 49 is provided to recover water discharged from the cultivation pot 60 and return the water to the storage unit 43. The discharge portion 49 may include discharge passages 4911 and 4913 that communicate with a seating communication hole 512 of the bed 50 and recover water from a medium accommodation space S2, which will be described later. The discharge passages 4911 and 4913 are connected to the storage unit 43 to recover water inside the cultivation pot 60. A discharge connection passage 493 connects a discharge recovery passage 499 to the discharge passages 4911 and 4913 to form a path through which the recovered water moves. The discharge connection passage 493 may extend from the top to the bottom. The first discharge passage 4911 and the second discharge passage 4913 may each be connected to the discharge connection passage 493. The discharge recovery passage 499 is connected to the storage unit 43. The discharge recovery passage 499 guides water to be recovered from the discharge connection passage 493 and stored in the storage unit 43. At least a portion of the discharge recovery passage 499, which communicates the discharge connection passage 493 with the storage unit 43, may be provided inside the water supply case 42 and connected to the storage unit 43.

The discharge portion 49 may include a discharge pump unit 495 that is connected to the discharge connection passage 493 and pumps the water recovered on the discharge connection passage 493 to the storage unit 43. When the discharge pump unit 495 is operated, water in the medium accommodation space S2, which will be described later, may be recovered to the discharge portion 49. When the operation of the discharge pump unit 495 is stopped, water in the medium accommodation space S2 may not be recovered to the discharge portion 49.

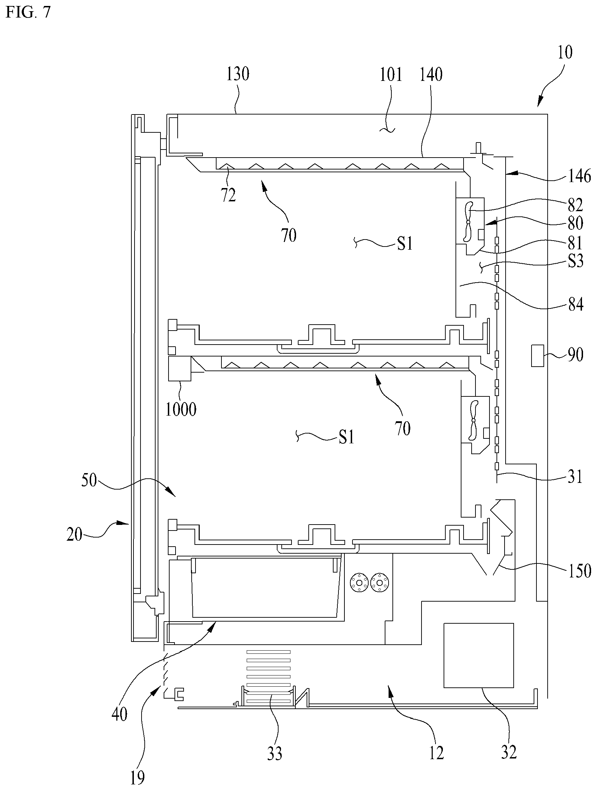

FIG. 7 is a view schematically showing a side cross-section of the plant cultivation apparatus according to an embodiment of the present invention. The structure of the plant cultivation apparatus is described with reference to FIG. 7.

The cabinet 10 may include an outer case 130 that forms the outer appearance and an inner case 140 that forms the cultivation space. An insulating material 101 may be provided between the outer case 130 and the inner case 140. The plant cultivation apparatus 1 according to an embodiment of the present invention may effectively insulate the cultivation space S1 inside the cabinet 10 from the outside of the cabinet 10 through the insulating material 101.

The outer case 130 may be made of a metal material. The outer case 130 may include at least one plate that forms the outer surface of the cabinet 10.

A machine compartment 12 may be provided below the cabinet 10. The machine compartment 12 may include a compressor 32, a condenser 33, and the like. The machine compartment 12 may include a separate space divided from the cultivation space S1.

A control unit 90 may be provided at the rear surface of the cabinet 10. The control unit 90 may be configured to control the overall operation of the plant cultivation apparatus 1. The control unit 90 may include a compressor printed circuit board (PCB) (not shown) separately provided for controlling the compressor 32.

The plant cultivation apparatus 1 according to an embodiment of the present invention may include a light emitting unit 70 including a light emitter 72 that irradiates light toward the cultivation space S1. The light emitting unit 70 may be provided above the bed 50. The light emitting unit 70 may irradiate light toward the bed 50 to provide light necessary for plants. The light emitted by the light emitting unit 70 may be set to be similar to sunlight. The light emitted by the light emitting unit 70 may be set to a light amount and irradiation time optimized for the plants being cultivated.

When the light emitting unit 70 is turned on while the door 20 is closed, the cultivation space S1 becomes bright and the interior may be seen through the door panel portion 23. When the supply of power to the light emitting unit 70 is cut off while the door 20 is closed, the cultivation space S1 becomes dark and the cultivation space S1 may be made invisible due to the color or optical characteristics of the door panel portion 23.

The inner case 140 may include a plurality of plates forming the cultivation space S1 inside the cabinet 10. At least a portion of the inner case 140 may be made of a plastic material. The inner case 140 may be made of a metal material with excellent heat conduction performance, such as aluminum. Since the inner case 140 made of a metal material has excellent heat transfer performance, the cultivation space S1 may have a uniform temperature distribution when heating or cooling the cultivation space S1.

The inner case 140 may be configured to reflect light emitted from the light emitting unit 70. The light emitted from the light emitting unit 70 may be reflected from the surface of the inner case 140, so that light may be irradiated evenly to plants in the entire area of the bed 50, thereby eliminating the occurrence of shaded areas where light is not irradiated. Each surface of the inner case 140 may be further subjected to surface treatment, painting, or film attachment so as to improve reflection performance.

The inner case 140 may include an inner rear plate 146 forming a rear surface. An evaporator 31 may be disposed on the front surface of the inner rear plate 146. A heater (not shown) may be provided on the back surface of the inner rear plate 146. Accordingly, the air flowing into the cultivation space S1 from the rear of the cultivation space S1 may be heated and cooled. For example, the interior of the cultivation space S1 may be maintained at a temperature (for example, 18°C-28°C) suitable for plant growth by the evaporator 31 and the heater (not shown). Of course, a heating configuration other than the heater (not shown) may be provided as necessary, and various heating methods, such as a heating structure using hot gas or a heating structure through switching of a refrigeration cycle, may be possible. The plant cultivation apparatus 1 according to an embodiment of the present invention may include a temperature sensor (not shown) provided in the cabinet 10 to measure the temperature within the cultivation space S1, and the temperature of the cultivation space S1 may be maintained constant through the temperature sensor (not shown), regardless of the external temperature of the cabinet 10.

The plant cultivation apparatus 1 according to an embodiment of the present invention may include a blowing unit 80 including a blower fan 82 that circulates air in the cultivation space S1. The blowing unit 80 may be provided in front of the evaporator 31. The blowing unit 80 may be provided below the light emitting unit 70 and above the bed 50. The blowing unit 80 may blow air from the rear of the bed 50 toward the front. The number of blower fans 82 may correspond to the number of beds 50. The blowing unit 80 may be provided in each cultivation space S1 divided by the bed 50. Independent air circulation may be achieved in each cultivation space S1 by the blowing unit 80 provided to correspond to each cultivation space S1. The plurality of blowing units 80 disposed toward one direction in which the cultivation space S1 is disposed may have the same structure and shape, except that the mounting positions thereof are different. The blowing unit 80 may be spaced apart from the inner rear plate 146 so as to facilitate the introduction of cooled or heated air and may be provided so as not to interfere with the evaporator 31.

Air inside the cultivation space S1 is circulated by the blowing unit 80, and in particular, the circulated air passes through the evaporator 31, so that the entire inside of the cultivation space S1 may have a uniform temperature and the temperature of the cultivation space S1 may be rapidly adjusted.

The air circulated by the blowing unit 80 may flow while passing over the upper surface of the bed 50 and the lower surface of the light emitting unit 70. Since the air flowing due to the blowing unit 80 passes over the upper surface of the bed 50, it is possible to facilitate the respiration of plants growing in the cultivation pot 60 mounted on the bed 50 and allow the plants to shake, thereby reducing stress on the plants and providing optimal airflow necessary for growth. In addition, the air flowing due to the blowing unit 80 may prevent overheating of the light emitting unit 70 while passing over the lower surface of the light emitting unit 70.

The blowing unit 80 may discharge air heated or cooled by the heater 102 or the evaporator 31 from the upper end and may circulate the air inside the cultivation space S1 by allowing air to be sucked from a position adjacent to the upper surface of the bed 50.

The upper end of the blowing unit 80 may be configured to be coupled to a portion of the rear of the light emitting unit 70. The blowing unit 80 may prevent components provided in the inner rear plate 146, including the evaporator 31, from being exposed to the outside.

The evaporator 31 is located between the inner rear plate 146 and the blowing unit 80. The evaporator 31 may be cooled by a refrigerant flowing due to the driving of the compressor 32. In addition, the cooled air from the evaporator 31 may circulate inside the cultivation space S1 through the blowing unit 80 to evenly cool the cultivation space S1.

The heater (not shown) may be provided on the back surface of the inner rear plate 146. The heater (not shown) may be configured to be buried by the insulating material 101. The heater (not shown) may be disposed in an area corresponding to the evaporator 31. As the heater (not shown) is driven, heated air may flow into the cultivation space S1 through the blowing unit 80 and may circulate in the cultivation space S1. Since the heater (not shown) is located in an area corresponding to the evaporator 31, the heater may be operated during the freezing of the evaporator 31 and may be used to defrost the evaporator 31.

The evaporator 31 and the heater (not shown) may be disposed between the upper portion and the lower portion of the inner rear plate 146. The evaporator 31 and the heater (not shown) are configured so that at least portions thereof overlap portions of the blowing unit 80 disposed above and below. Air heated and cooled by the heater (not shown) and the evaporator (not shown) may be circulated by the blowing unit 80. The entire partitioned space within the cultivation space S1 may be evenly cooled or heated through one heater (not shown) and the evaporator 31.

A return duct 150 may be located in the lower portion of the inner case 140. The return duct 150 may have a structure that communicates with the machine compartment 12 such that the air inside the cultivation space S1 may be discharged into the machine compartment 12.

The return duct 150 may be disposed below the inner rear plate 146 and below the evaporator 31. When condensation occurs in the evaporator 31, water may be discharged into the machine compartment 12. Accordingly, a drain pan (not shown) that may collect water discharged through the return duct 150 may be provided inside the machine compartment 12.

The machine compartment 12 may include a supply duct (not shown) that communicates with an air flow space S3 formed between the blowing unit 80 and the inner rear plate 146, and may supply carbon dioxide (CO2) required for plant growth from the machine compartment 12 to the air flow space S3 through the supply duct (not shown).

The air in the cultivation space S1 may be discharged into the air flow space S3 through the blowing unit 80 and may be discharged from the air flow space S3 through the return duct 150. At least one of the supply duct (not shown) and the return duct 150 may be provided to be open or close the inside thereof, such that at least one of the supply duct (not shown) and the return duct 150 may be opened when carbon dioxide is supplied to the cultivation space S1.

An outlet of the supply duct (not shown) may be provided at the lower portion of the inner rear plate 146, more specifically, at the lower side of the blowing unit 80 disposed below. The supply duct (not shown) may communicate with the machine compartment 12 and may supply carbon dioxide to the inside of the cultivation space S1 through a vent 819 provided in the lower cabinet 19, or may discharge the air in the cultivation space S1 through the vent 819.

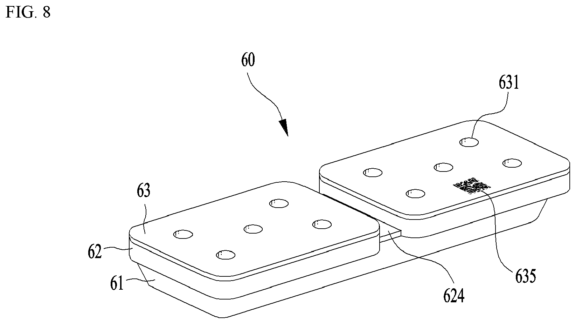

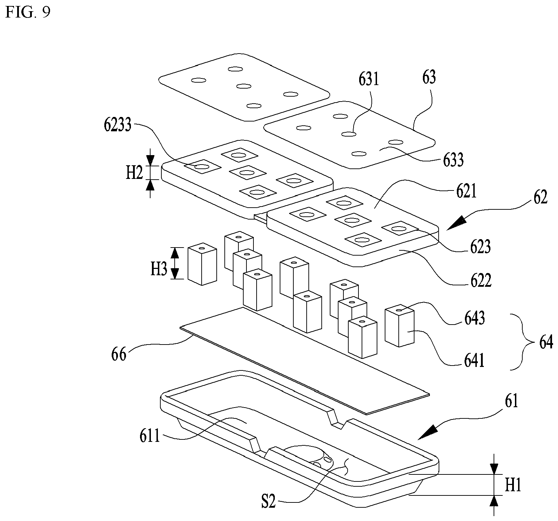

FIG. 8 is a perspective view showing the cultivation pot 60 applied to the plant cultivation apparatus 1 according to an embodiment of the present invention, and FIG. 9 is an exploded view showing the cultivation pot 60 applied to the plant cultivation apparatus 1 according to an embodiment of the present invention. Referring to FIGS. 8 and 9, the cultivation pot 60 according to an embodiment of the present invention is described.

The cultivation pot 60 may include a container portion 61 that is seated on the bed 50 and has an open upper portion, and a cover portion 62 that shields the open upper portion of the container portion 61.

The container portion 61 is formed to have an open upper portion. In order to be seated on the bed 50, the container portion 61 may be formed to have a size and shape corresponding to the bed seating portion 521 provided on the upper surface of the bed 50. The container portion 61 may have a size set to be accommodated in the bed seating portion 521. A user may select the cultivation pot 60 in which the plant to be cultivated is sown, may seat the cultivation pot 60 in a desired location on the bed 50, and may begin cultivating the plant.

The container portion 61 may include a bottom surface 611 of the cultivation pot. The container portion 61 has a sidewall extending from the bottom surface 611 to a predetermined height H1. The container portion 61 may form the medium accommodation space S2 for accommodating a medium 64 therein. A discharge hole 6135 may be formed in the container portion 61 such that water in the medium accommodation space S2 may be discharged to the discharge passages 4911 and 4913. The discharge hole 6135 may be provided on the bottom surface 611 of the container portion 61 and may communicate with the discharge passages 4911 and 4913 provided in the bed 50. Water in the medium accommodation space S2 may flow from the water supply unit 40 through the discharge hole 6135, or may be recovered back to the water supply unit 40.

A cultivation filter 66 may be provided on the bottom surface 611 of the cultivation pot 60. The cultivation filter 66 filters foreign matters in the water discharged from or introduced into the discharge hole 6135. Foreign matters filtered by the cultivation filter 66 may be part of the medium 64 generated during the plant growth process or may be part of the roots of the plant. The cultivation filter 66 may be provided to shield the discharge hole 6135 and may prevent foreign matters, which may be generated in the medium accommodation space S2, from flowing into the water supply unit 40.

The medium 64 is accommodated inside the container portion 61. The medium 64 is provided in the medium accommodation space S2 formed by the container portion 61. The medium 64 includes plant seeds embedded therein. Additionally, at least a portion of the grown plants are embedded in the medium 64. The roots of the plant may penetrate through the medium 64 and receive nutrient solution. The medium 64 may extend from the bottom surface 611 of the container portion 61 toward the cover portion 62 to a predetermined height H3. The height H3 of the medium 64 is set to a height appropriate for accommodation in the container portion 61.

The medium 64 may include nutrients necessary for plant growth, and may be configured to allow plant growth to proceed at an appropriate rate as long as water is supplied, even if no additional nutrients are supplied.

The medium 64 includes a medium body 641 that forms the exterior appearance of the medium 64. The medium body 641 forms the body of the medium 64. A medium hole 643 in which plant seeds are embedded is formed on the upper side of the medium body 641. The medium 64 may be made of various materials that may absorb water stored in the medium accommodation space S2 and supply water to the seeds or roots inside the medium 64. The medium 64 is configured to allow the roots of plants to grow and support. The medium 64 may vary in material, shape, and size depending on the characteristics of the crop.

The seeds embedded in the medium hole 643 germinate, and the stem of the plant may pass through a cover penetration hole 6233 and grow toward the upper portion of the cover portion 62. Therefore, for smooth growth of plants, the diameter of the cover penetration hole 6233 may be formed to be greater than the diameter of the medium hole 643. That is, when the cultivation pot 60 is viewed from above, the cover penetration hole 6233 may be formed in a shape that is expanded along the radial direction of the medium hole 643. The diameter of the cover penetration hole 6233 may be appropriately designed considering the size of the plant to be cultivated.

The cover portion 62 covers the medium accommodation space S2 of the container portion 61. The cover portion 62 covers the open upper portion of the container portion 61. The cover portion 62 may be coupled to the container portion 61. Since water supplied to the medium 64 may be stored in the medium accommodation space S2, when exposed to external air and light emitted by the light emitting unit (not shown), the reproduction of microorganisms in the water may become active, which has a negative effect on plant growth. In order to prevent this, the cover portion 62 is configured to shield the medium accommodation space S2 of the container portion 61, thereby preventing the medium accommodation space S2 from being exposed to the outside of the cultivation pot 60. That is, due to the cover portion 62, the water stored inside the medium accommodation space S2 may be prevented from being exposed to the light emitted by the light emitting unit (not shown) provided at the upper portion of the cultivation pot 60, thereby preventing the cultivation pot 60 from contacting the external air. In addition, due to the cover portion 62, the roots of the plant growing in the medium 64 are prevented from being exposed to the light emitting unit, thereby improving the growth of the plant.

The cover portion 62 may be coupled to the container portion 61 by interference fit. However, the method of coupling the cover portion 62 to the container portion 61 is not intended to the presented methods.

The cover portion 62 may include a medium accommodation portion 623 which is provided at a position corresponding to the medium 64 and into which the upper end portion of the medium 64 is inserted. The medium accommodation portion 623 may be formed on the upper surface 621 of the cover portion 62. A side surface 622 of the cover portion 62 may form a predetermined height H2 and may extend downward. The medium accommodation portion 623 may be formed to have a height equal to a height H2 of the cover portion 62 to accommodate the upper end portion of the medium 64. When the cover portion 62 is coupled to the container portion 61 by the medium accommodation portion 623, the position of the medium 64 may be fixed inside the container portion 61.

A plurality of media 64 and a plurality of medium accommodation portions 623 may be provided. The number of medium accommodation portions 623 may be provided to correspond to the number of media 64. Alternatively, in order to fix the position of the medium 64, the number of medium accommodation portions 623 may be provided at least as many as the number of media 64.

The medium accommodation portion 623 may be disposed at the center of the upper surface of the cover portion 62. Additionally, a plurality of medium accommodation portions 623 may be arranged along the circumference of the cover portion 62. The arrangement of the medium accommodation portion 623 is not limited to the illustrated and described embodiments. The number, arrangement, and separation distance of the plurality of medium accommodation portions 623 may be appropriately designed depending on the type of plant being cultivated.

The cultivation pot 60 may further include a label portion 63. The label portion 63 may be provided on the upper surface of the cover portion 62. A seed name may be written on a label portion 63. The label portion 63 is provided so that the seed name of the plant is written thereon, and the type of plant growing in the cultivation space S1 may be easily recognized.

The label portion 63 may be provided to cover the upper surface of the cover portion 62. As shown in the drawing, a plurality of label portions 63 may be provided on the upper surface of the cover portion 62. The label portion 63 may be coupled to the remaining area of the cover portion 62 excluding a cover coupling portion 624. When the cultivation pot 60 is viewed from above the cultivation pot 60, an upper surface 633 of the label portion 63 may be exposed, and the upper surface of the cover portion 62 except for the cover coupling portion 624 may not be exposed.

The label portion 63 penetrates at a position corresponding to the cover penetration hole 6233 to provide a label hole 631 that is smaller in diameter than the cover penetration hole 6233. Plants may pass through the label hole 631 and grow toward the upper portion of the cultivation pot 60.

Plant information 635 may be printed and provided on the label portion 63. The plant information 635 may be provided as a QR code. Alternatively, the plant information may be provided in the form of text or barcode. The plant information 635 printed on the label portion 63 may be information about the type of plant embedded in the cultivation pot 60. In an embodiment, a case where the plant information 635 is printed on the label portion 63 has been described, but the plant information 635 may also be displayed at any position on the cultivation pot 60.

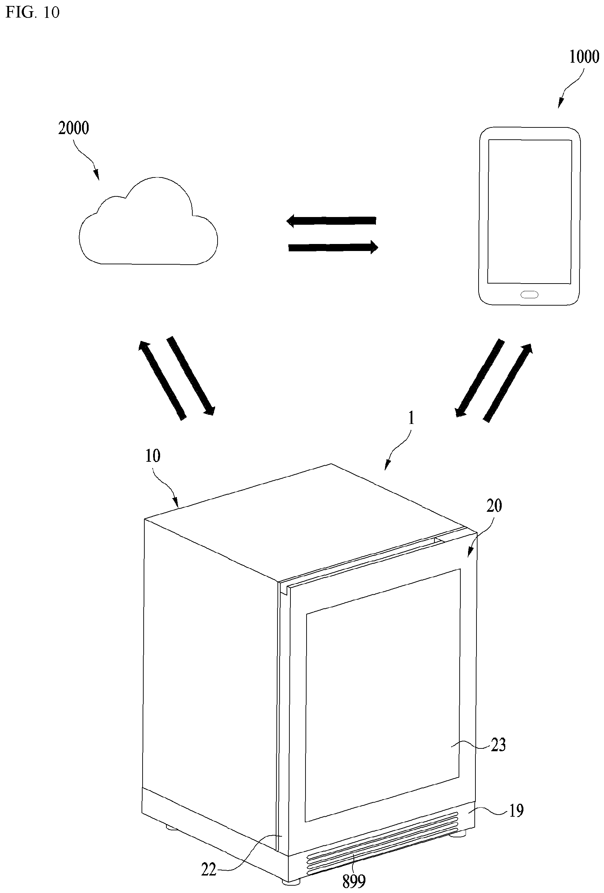

FIG. 10 is a view describing a plant management system according to an embodiment of the present invention and showing a state in which a plant cultivation apparatus, a server, and a user terminal communicate with each other. The following description is given with reference to FIG. 10.

A plant cultivation apparatus 1 may be connected to a user terminal 1000 and/or a remote server 2000. Accordingly, the plant cultivation apparatus 1, the user terminal 1000, and the server 2000 may be directly or indirectly connected to each other to enable information transmission. For example, the plant cultivation apparatus 1, the user terminal 1000, and the server 2000 may be connected to a network through wireless communication. For example, the wireless communication may be one of various methods, such as Wi-Fi, Bluetooth, Radio Frequency Identification (RFID), Infrared Data Association (IrDA), Ultra Wideband (UWB), ZigBee, Near Field Communication (NFC), Wi-Fi Direct, or Wireless Universal Serial Bus (Wireless USB).

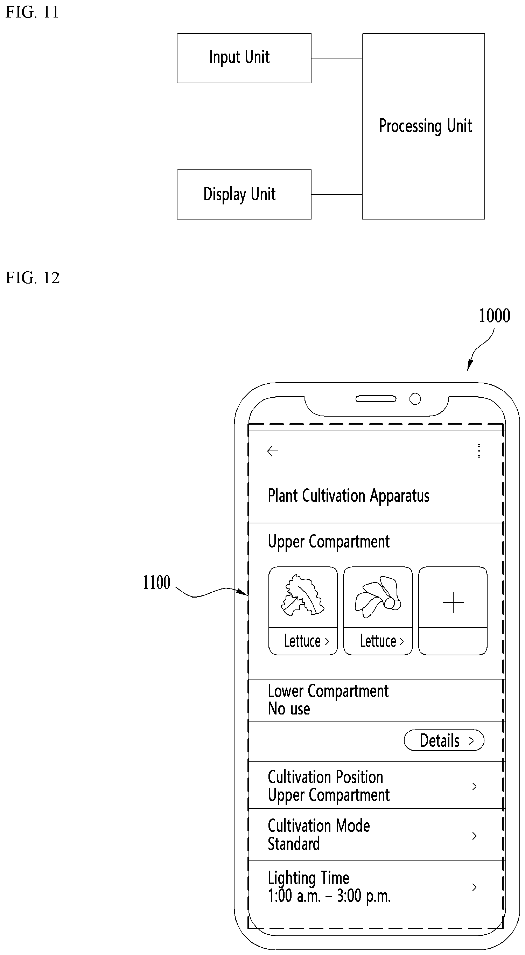

FIG. 11 is a view describing a processing unit according to an embodiment of the present invention. The processing unit may be a processor embedded in the user terminal 1000. Alternatively, the processing unit may be a processor provided to the server 2000. Alternatively, the processing unit may be a processor embedded in the plant cultivation apparatus 1. In the present invention, the processing unit may not be a single subject, but may be a plurality of subjects. For example, the processing unit may include a combination of a processing unit embedded in the user terminal 1000, a processing unit provided in the server 2000, and/or a processing unit embedded in the plant cultivation apparatus 1. The processing unit may be connected to an input unit that allows a user to input information and may receive information. The processing unit may be connected to the display unit and may display the processing result to the user.

FIG. 12 shows a state in which a cultivation screen 1100 is displayed on a user terminal 1000. The following description is given with reference to FIG. 11.

The user terminal 1000 may include an input unit and a display unit. In an embodiment, the user terminal may include a touch panel. The touch panel may function as the input unit and the display unit. Additionally, the user terminal 1000 includes a camera.

The user terminal 1000 may include a mobile phone, a smart phone, a laptop computer, a personal digital assistant (PDA), a portable multimedia player (PMP), a slate PC, and a tablet PC, an ultrabook, or the like, which is carried by the user.

The cultivation screen 1100 may display information about plants cultivated in the plant cultivation apparatus 1. For example, the plant cultivation apparatus 1 has three bed seating portions 521 in the upper bed 51 and three bed seating portions 521 in the lower bed 52. Plants cultivated in the upper bed 51 are input in the [upper compartment] of the cultivation screen 1100, and the input plants are displayed. Plants cultivated in the lower bed 52 are input in the [lower compartment] of the cultivation screen 1100, and the input plants are displayed.

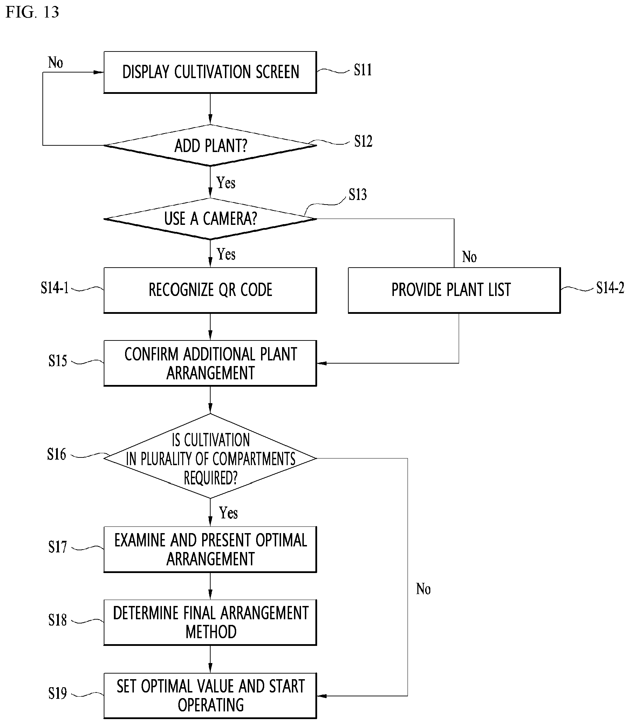

FIG. 13 is a flowchart describing a method for inputting a crop to be cultivated or a crop being cultivated to the user terminal 1000 and a flow of receiving a suggestion on a management method for the input plant. The following description is given with reference to FIG. 13. Operations described below are executed by a program installed on and executed by the user terminal 1000.

The user operates the user terminal 1000 to display the cultivation screen 1100 (S 11). The cultivation screen 1100 may allow the user to input whether to add a plant (S12). When an input to add a plant is received from the user, the user may be allowed to input a method of adding the plant. For example, a method of capturing plant information by using a camera (S13) or a method of selecting a plant to be added from a plant list (S14-2) may be selected. This may be implemented by receiving confirmation from the user whether to use the camera (S13), executing the camera when the user selects to use the camera, and providing a list of plants to the user when the user selects not to use the camera.

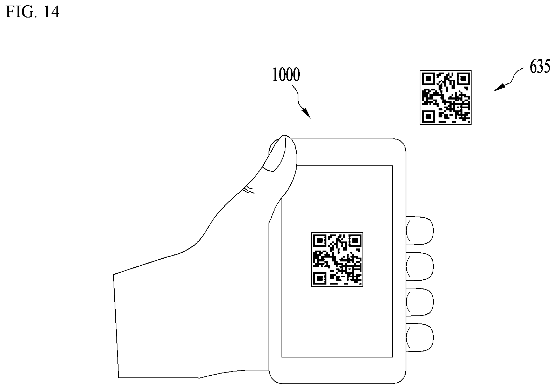

When the user selects the method of capturing the plant information by using the camera, the user terminal 1000 executes the camera. FIG. 14 shows a state in which the user uses the user terminal 1000 to capture a photo including plant information 635. The user terminal 1000 receives the photo including the plant information 635 from the camera (S14-1). The plant information 635 may be a QR cord. The processing unit recognizes plant information from the QR cord. The plant information recognized from the QR cord may be species information. The species used in the present specification refers to the type of plant and may be classified into, for example, flowers, leafy vegetables, and fruits. As another example, the species may be the name of a plant such as green lettuce, bok choy, mustard greens, oak leaf, candle cockscomb, viola, and marigold.

When the user selects the method of selecting the plant to be added from the plant list, the user terminal 1000 may provide the plant list to the user (S14-2). The user may select and input the plant desired to be cultivated from the provided plant list.

When, in addition to the input plant, other plants are already being cultivated in the plant cultivation apparatus 1, it is confirmed that the plant is an additional plant arrangement (S15). When the additional plant arrangement is in progress, the processing unit arranges plants in the plurality of beds 50 and determines whether cultivation is required (S16). For example, when a first plant is being cultivated in the upper bed 51, the processing unit determines whether a second plant that is additionally input can grow well while sharing the growth environment with the first plant in the upper bed 51. Whether the plant can grow well while sharing the growth environment is determined by whether the temperature, amount of light, and nutrient solution required for the growth of each plant are similar. When the second plant is not a plant that can grow well while sharing the growth environment with the first plant, the processing unit generates an arrangement method in which the second plant is arranged on the lower bed 52. Growth information related to plants, such as the first plant and the second plant, is loaded from a prestored database (DB). The database (DB) stores information about the growth environment (e.g., temperature, amount of light, wind strength, nutrient solution) of various plants.

As another example, in a case where other plants are already being cultivated in the plant cultivation apparatus 1, when additional plant arrangement of the input plant is in progress, the bed 50 on which plants with similar growth environments among other plants are arranged is recommended as the bed 50 suitable for growth. Specifically, when the first plant is being cultivated in the upper bed 51 and the third plant is being cultivated in the lower bed 52, the processing unit determines whether the second plant that is additionally input can grow well while sharing the growth environment with the first plant or the third plant. When it is determined that the second plant can grow well while sharing the growth environment with the first plant, the upper bed 51 is determined as a bed suitable for growth and set as a recommended bed. When it is determined that the third plant can grow well while sharing the growth environment with the first plant, the lower bed 52 is determined as a bed suitable for growth and set as a recommended bed. When a plurality of species are to be cultivated in one bed 50, one or more of the amount of light or temperature provided to the selected bed 50 by the plant cultivation apparatus 1 may be determined by comparing the growth environment conditions of the plurality of species and determining the maximum value of a common range acquired through the comparison. In addition, when a plurality of species are to be cultivated in one bed 50, the supply cycle of the nutrient solution provided to the selected bed 50 by the plant cultivation apparatus 1 may be determined by comparing the growth environment conditions of the plurality of varieties and determining a smaller value (shorter cycle) of a common range acquired through the comparison.

The generated optimal arrangement method is presented to the user (S17). The arrangement method may be presented through the user terminal 1000. The user determines whether to accept the presented arrangement method. The user determines which bed to arrange among the beds 50 of the plant cultivation apparatus 1 (S18). The arrangement confirmed by the user may be input to the processing unit through the user terminal 1000. The processing unit may command the plant cultivation apparatus 1 based on the input arrangement, may set the optimal value for the input plant, and may operate (S19).

A case where the additional plant does not need to be cultivated separately from the existing plants is checked (S16). When the first plant, which is an existing plant, is being cultivated in the upper bed 51, the additional second plant may be provided with an optimal environment regardless of whether cultivated in the upper bed 51 or the lower bed 52. Accordingly, the user may freely select the bed 50 on which the second plant is to be cultivated. When the user selects the bed 50 where the second plant is to be located and inputs this to the processing unit through the user terminal 1000, the processing unit may set the optimal value for the input plant based on the input arrangement and may operate (S19).

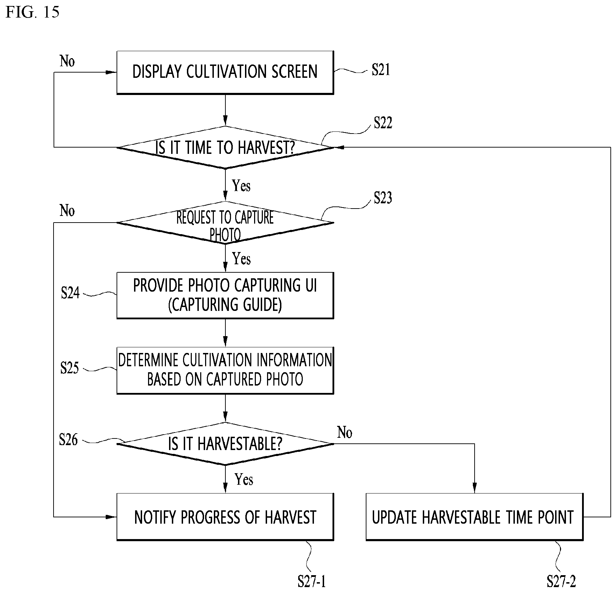

FIG. 15 is a flowchart describing a flow of providing notification to a user about harvesting plants cultivated in the plant cultivation apparatus 1. Operations described below are executed by a program installed on and executed by the user terminal 1000. The following description is given with reference to FIG. 15. The user terminal 1000 or the server 2000 stores information about the crops being cultivated by the user. The processing unit provides the user with information about whether the crop can be harvested, based on the stored information.

The user operates the user terminal 1000 to display the cultivation screen 1100 (S21). The processing unit determines whether the harvestable time point for the crop being cultivated by the user has arrived (elapsed) (S22). To determine the first harvestable time point, the harvest time of each cultivated plant stored in advance is determined based on a cultivation start date.

When the harvestable time point has arrived (elapsed), the processing unit requests the user to capture a photo through the user terminal 1000 (S23). When the user approves capturing the photo, the user terminal 1000 executes the camera and provides a capturing guide for capturing the photo. The capturing guide may be provided as a photo capturing user interface (UI). An image alignment state may be acquired through the capturing guide. Meanwhile, the request to capture the photo or the notification of the harvestable time point is transmitted at the time when the user is highly likely to be at home. The time when the user is highly likely to be at home may be between 8 p.m. and 10 p.m., which is the time when most users are generally at home, or the time when it is determined that the user is at home based on global positioning system (GPS). Additionally, it may be configured so that the user can manually inquire about harvest availability before the harvest time.

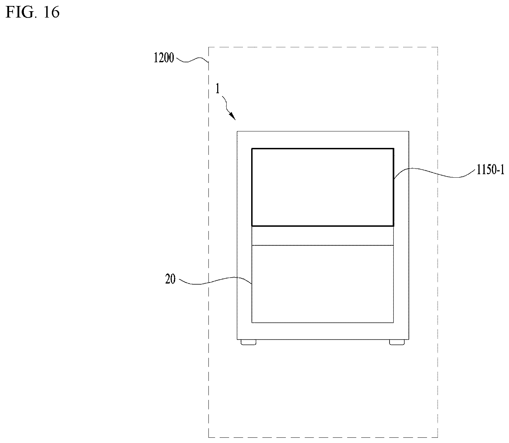

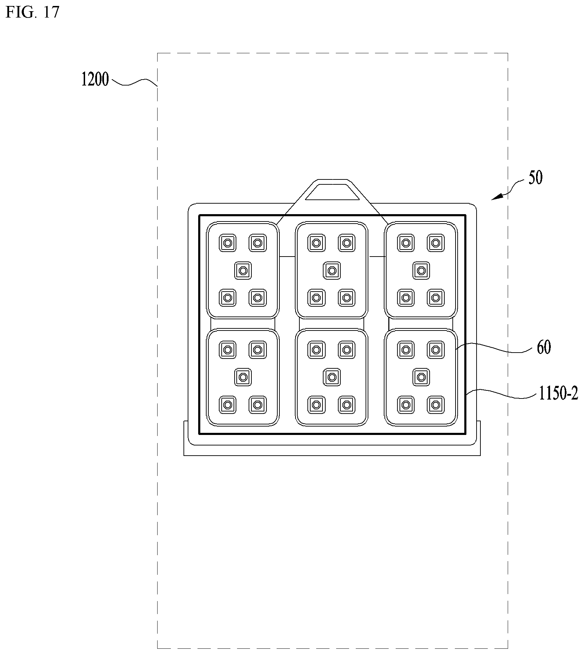

FIG. 16 shows a camera screen 1200 displayed on the user terminal 1000 and represents a first example in which a capturing guide 1150-1 is provided. FIG. 17 shows a camera screen 1200 displayed on the user terminal 1000 and represents a second example in which a capturing guide 1150-2 is provided. The following description is given with reference to FIG. 16. When capturing an image of the plant cultivation apparatus 1 from the front, the capturing guide 1150-1 may guide an area, in which the upper bed 51 is provided and which is illuminated through the window of the door 20, with a rectangular border. The following description is given with reference to FIG. 17. When capturing an image of the bed 50 from above, the capturing guide 1150-2 may guide the area, in which the cultivation pot 60 is provided, as a rectangular border. When the capturing guide is provided, the accuracy of comparison between photos captured at different times increases. For example, when comparing photos captured at a first time point and a later second time point, the two photos captured according to the capturing guide have the same capturing angle and scale, and thus, it may be easy to determine the degree of growth.

The following description is given with reference to FIG. 15 again. The user captures an image of the exterior appearance of the growing plant by using the camera of the user terminal 1000. The exterior appearance of the plant is plant information according to an embodiment of the present invention. The processing unit determines cultivation information by analyzing the appearance of the plant in the captured photo (S25). Cultivation information may be the extent to which the plant has grown. The processing unit determines whether the plant growth level is harvestable, based on the captured photo (S26). When it is determined that the plant growth level is harvestable, the processing unit notifies to the user through the user terminal 1000 that harvesting is possible (S27-1). When it is determined that the plant has not grown to a harvestable level, the harvestable time point is updated (S27-2). The harvestable time point may be updated by newly calculating the harvestable time point based on the captured photo.

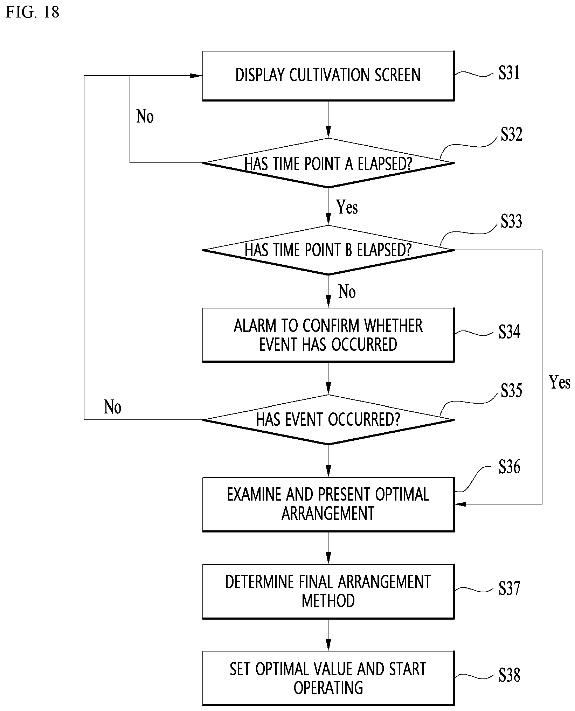

FIG. 18 is a flowchart describing a flow of confirming whether it is necessary to provide a new environment to a plant in a plant growth process and providing an optimal arrangement. Operations described below are executed by a program installed on and executed by the user terminal 1000. The following description is given with reference to FIG. 18. The user terminal 1000 or the server 2000 stores information about the crops being cultivated by the user. The processing unit requests the user to confirm whether an event has occurred, based on the stored information, and presents the optimal arrangement of plants depending on whether the event has occurred.

The user operates the user terminal 1000 so that the cultivation screen 1100 is displayed (S31). The processing unit determines whether the harvestable time point for the crop being cultivated by the user has elapsed (S32). A time point A may be set based on previously collected data. When it is determined that the time point A has elapsed, it is determined whether time point B corresponding to the final set deadline has elapsed (S33).

Even when the time point B has not elapsed, an alarm for an event occurrence is provided (S34). When it is input that an event has occurred (S35), the optimal arrangement for the plants being cultivated is examined and the optimal arrangement is presented to the user (S36). The event may be flowering or fruiting of a plant, etc.

The examination of the optimal arrangement involves separating the cultivation spaces S1 of some plants and other plants when there is a space in which plants are not cultivated among a plurality of cultivation spaces S1 and an event occurs only in some of the plants cultivated in one cultivation space S1. In other words, the examination of the optimal arrangement may involve separately cultivating plants in which an event occurred and plants in which an event did not occur, by using an uncultivated cultivation space S 1. In the case of plants, environmental conditions may need to change after an event occurs. Accordingly, crops with similar environmental conditions are arranged in the bed 50 of the same cultivation space S1, considering the changed environmental conditions after the event occurrence.

When the time point B has elapsed, the optimal arrangement for the plants being cultivated is examined and the optimal arrangement is presented to the user even when there is no user input regarding the occurrence of the event, without providing an alarm for the event occurrence (S36). As an example, the processing unit receives a photo including the exterior appearance of a growing plant from the user through the user terminal 1000. The processing unit determines the degree of growth of the plant based on the exterior appearance of the plant, and re-determines the cultivation space S1 suitable for the growth of the plant based on the degree of growth.

The examined optimal arrangement is presented to the user, and the user is confirmed whether the optimal arrangement has been applied as the final arrangement (S37). The processing unit may command the plant cultivation apparatus 1 based on the input arrangement, may set the optimal value for the input plant, and may operate (S38).

The photos captured in the above-described process may be arranged in chronological order and produced as a video. The processing unit arranges the captured photos in chronological order and produces a video. The user may observe a change according to the life cycle of crops through the generated video and have fun growing plants. In addition, because videos are created from captured photos essential for optimal management, videos including plant growth may be acquired without capturing separate photos to observe plant growth.
Although the present invention has been shown and described in relation to specific embodiments, it will be apparent to those of ordinary skill in the art that the present invention can be improved and changed in various ways without departing from the technical spirit of the present invention provided by the following claims.

## Claims

1. A plant management method of managing plants by using a plant cultivation apparatus, the plant management method comprising:
acquiring, by a processing unit, a photo including plant information of a first plant;
recognizing, by the processing unit, the plant information included in the photo; and
presenting, by the processing unit, to a user a first plant management method suitable for the first plant in the plant cultivation apparatus from the plant information.

2. The plant management method of claim 1, wherein the plant cultivation apparatus comprises a plurality of beds capable of providing different growth environments,
wherein the generating of the first plant management method comprises determining a bed suitable for growth of the first plant among the plurality of beds.

3. The plant management method of claim 2, wherein, when a second plant different from the first plant is being cultivated in one of the plurality of beds, the first plant management method comprises, when the first plant is not suitable for sharing the growth environment with the second plant, determining a bed, which is different from the bed in which the second plant is cultivated, as the bed suitable for the growth of the first plant.

4. The plant management method of claim 2, wherein, when a second plant different from the first plant and a third plant different from the first plant and the second plant are being cultivated in one or more of the plurality of beds, the first plant management method comprises determining a bed, on which a plant with a similar growth environment to the first plant among the second plant and the third plant are placed, as the bed suitable for the growth of the first plant.

5. The plant management method of claim 2, further comprising, by the processing unit, receiving, from a user, whether the first plant is arranged in the first plant management method,
wherein the processing unit commands the plant cultivation apparatus to control one or more growth environment conditions among an amount of light, a temperature, and a nutrient solution as an optimal value for the first plant.

6. The plant management method of claim 2, wherein, when a plurality of species of plants are placed on one of the plurality of beds, one or more of an amount of light or a temperature provided to the one bed by the plant cultivation apparatus are compared with a growth environment condition of each of the plurality of species of plants and a maximum value of a common range thereof is determined.

7. The plant management method of claim 2, wherein, when a plurality of species of plants are placed on one of the plurality of beds, a supply cycle of a nutrient solution provided to the one bed by the plant cultivation apparatus is determined to be the shortest by comparing the growth environments of each of the plurality of species of plants.

8. The plant management method of claim 2, comprising:
when a first setting time point has elapsed, requesting, by the processing unit, the user to confirm whether an event has occurred; and
when the occurrence of the event is received, presenting, by the processing unit, to the user a second plant management method in which the bed suitable for the growth of the plant is re-determined based on a growth environment conditions after the occurrence of the event.

9. The plant management method of claim 8, wherein the second plant management method comprises, when an empty bed exists among the plurality of beds, separating some of a plurality of plants being cultivated in one bed and arranging the separated plants in the empty bed.

10. The plant management method of claim 8, wherein, when a second setting time point that is later than the first setting time point has elapsed without the occurrence of the event, the processing unit receives a photo including an exterior appearance of the plant after the second setting time point, determines a degree of growth of the plant from the exterior appearance of the plant, and presents to the user a third plant management method in which the bed suitable for the growth of the plant is re-determined based on the degree of growth.

11. The plant management method of claim 1, wherein the processing unit communicates with the user through a user terminal, and
wherein the user terminal provides a capturing guide to the user when capturing a photo containing the plant information.

12. The plant management method of claim 1, wherein the plant information is information about species of a plant to be cultivated.

13. The plant management method of claim 1, wherein the photo including the plant information is a photo captured after a harvestable time point of the plant being cultivated in the plant cultivation apparatus, and the plant information is an exterior appearance of the plant.

14. The plant management method of claim 10, wherein the third plant management method comprises:
determining whether the plant is harvestable from the plant information;
when it is determined that the plant is harvestable, notifying to the user that the plant is harvestable; and
when it is determined that the plant is unharvestable, updating a harvestable time point.

15. The plant management method of claim 1, wherein the processing unit generates a video by arranging the captured photos in chronological order.

16. An application program that is installed on and executed by a terminal to manage plants of a plant cultivation apparatus, the application program comprising:
acquiring a photo including plant information;
recognizing the plant information included in the photo; and
presenting to a user a first plant management method of the plant cultivation apparatus, which is output based on the plant information.

17. The application program of claim 16, wherein the plant cultivation apparatus comprises a plurality of beds capable of providing different growth environments, and
wherein the generating of the first plant management method comprises determining a bed suitable for growth of a plant recognized through the plant information among the plurality of beds.

18. The application program of claim 17, wherein the first plant management method comprises:
when other plants are being cultivated in one of the plurality of beds;
determining whether it is appropriate for the plant recognized through the plant information to share a growth environment with the other plant; and
when it is not appropriate for the plant recognized through the plant information to share the growth environment with the other plants, determining a bed, which is different from the bed in which the other plants are cultivated, as the bed suitable for the growth.

19. The application program of claim 17, wherein the first plant management method comprises, when other plants are being cultivated in one of the plurality of beds, determining a bed, on which a plant with a similar growth environment among the plants recognized through the plant information and the other plants is placed, as the bed suitable for the growth.

20. The application program of claim 17, wherein, when a first setting time point has elapsed, a user is requested to confirm whether an event has occurred, and
wherein, when the occurrence of the event is received, a second plant management method in which the bed suitable for the growth of the plant is re-determined based on a growth environment conditions after the occurrence of the event is presented to the user.

21. The application program of claim 20, wherein the second plant management method comprises, when an empty bed exists among the plurality of beds, separating some of a plurality of plants being cultivated in one bed and arranging the separated plants in the empty bed.

22. The application program of claim 20, wherein, when a second setting time point that is later than the first setting time point has elapsed without the occurrence of the event, a photo including an exterior appearance of the plant is received, and
wherein a degree of growth of the plant is determined from the exterior appearance of the plant, and a third plant management method in which the bed suitable for the growth of the plant is re-determined based on the degree of growth is presented to the user.

23. The application program of claim 16, wherein the photo including the plant information is a photo captured after a harvestable time point of the plant being cultivated in the plant cultivation apparatus, and the plant information is an exterior appearance of the plant, and
wherein the first plant management method comprises:
determining whether the plant is harvestable from the plant information;
when it is determined that the plant is harvestable, notifying to the user that the plant is harvestable; and
when it is determined that the plant is unharvestable, updating a harvestable time point.

24. The application program of claim 16, wherein a video is generated by arranging the captured photos in chronological order.
